(19) Europäisches Patentamt
European Patent Office
Office européen des brevets

(11) Veröffentlichungsnummer: **0 036 418**
**B1**

(12) # EUROPÄISCHE PATENTSCHRIFT

(45) Veröffentlichungstag der Patentschrift: **16.01.85**

(51) Int. Cl.[4]: **G 06 F 7/548,** G 03 F 3/08

(21) Anmeldenummer: **80901794.0**

(22) Anmeldetag: **26.09.80**

(86) Internationale Anmeldenummer: **PCT/DE 80/00138**

(87) Internationale Veröffentlichungsnummer: **WO 81/01065 (16.04.81** Gazette **81/9)**

(54) **VERFAHREN ZUR UMWANDLUNG VON DIGITALEN CHROMINANZ-SIGNALEN EINES RECHTWINKLIGEN FARBKOORDINATEN-SYSTEMS IN DIGITALE FARBTON-SIGNALE UND SÄTTIGUNGS-SIGNALE EINES POLAREN FARBKOORDINATEN-SYSTEMS UND TRANFORMATIONSSCHALTUNG.**

(30) Priorität: **05.10.79 DE 2940440**
**05.10.79 DE 2940422**
**05.10.79 DE 2940439**

(43) Veröffentlichungstag der Anmeldung: **30.09.81 Patentblatt 81/39**

(45) Bekanntmachung des Hinweises auf die Patenterteilung: **16.01.85 Patentblatt 85/3**

(84) Benannte Vertragsstaaten: **CH FR GB LI NL SE**

(56) Entgegenhaltungen: **US - A - 4 110 826**

(73) Patentinhaber: **DR.-ING. RUDOLF HELL GmbH, Grenzstrasse 1-5, D-2300 Kiel 14 (DE)**

(72) Erfinder: **KUHN, Franz, Ringenrade8, D-2301 Schönkirchen (DE)**
Erfinder: **LIPPEK, Wilfried, Petersburger Weg 72, D-2300 Kiel 1 (DE)**
Erfinder: **MÖLLGAARD, Klaus, Hofteichstrasse 16a, D-2300 Kiel (DE)**
Erfinder: **REDECKER, Friedrich, Hohrott 23, D-2305 Heikendorf (DE)**

**EP 0 036 418 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Verfahren zur Umwandlung von digitalen Chrominanz-Signalen eines rechtwinkligen Farbkoordinaten-Systems in digitale Farbton-Signale und Sättigungs-Signale eines polaren Farbkoordinaten-Systems und Transformationsschaltung.

Technisches Gebiet

Die Erfindung bezieht sich auf die elektronische Reproduktionstechnik, insbesondere auf die Farbkorrektur und Farberkennung.

Zugrundeliegender Stand der Technik

In der elektronischen Reproduktionstechnik werden durch bidpunktweise optoelektronische und trichromatische Abtastung einer Vorlage oder Farbe drei Farbkomponenten gewonnen, welche die Farbanteile Rot, Grün und Blau der abgetasteten Bildpunkte bilden.

Die Farbkomponenten stellen die Koordinaten der jeweiligen Farbe in dem dreidimensionalen Farbraum dar.

Bei der Fabrkorrektur werden die gemessenen Farbkomponenten korrigiert und daraus die zur Herstellung von Farbauszügen benötigten Farbauszug-Signale abgeleitet, welche ein Mass für die im späteren Druck erforderlichen Druckfarbmengen sind.

Bei der Farberkennung werden die gemessenen Farbkomponenten auf ihre Zugehörigkeit zu einem der innerhalb des Farbraums abgegrenzten Farberkennungsräume untersucht.

Die Farbkomponenten können den drei primären Farbmesswert-Signalen, den Chrominanz- und Luminanz-Signalen oder aber auch den Farbton-, Sättigungs- und Luminanz-Signalen entsprechen. Die primären Farbmesswert-Signale sind die rechtwinkligen Koordinaten des RGB-Farbraumes und die Chrominanz- und Luminanz-Signale die entsprechenden rechtwinkligen Koordinaten des Chrominanz/Luminanz-Farbraumes. Die Farbton-, Sättigungs- und Luminanz-Signale stellen die Zylinderkoordinaten des Farbton/Sättigungs/Luminanz-Farbraumes dar, wobei die Farbton-Signale die Winkel, die Sättigungs-Signale die Radien und die Luminanz-Signale die dritten Koordinaten bilden.

Aus der DE-A-25 44 703 und der DE-A-29 23 468 ist es schon bekannt, bei der Farbkorrektur oder Farberkennung anstelle der Farmesswert-Signale oder der Chrominanz- und Luminanz-Signale die Farbton-, Sättigungs- und Luminanz-Signale zu verwenden.

In diesem Falle müssen gemäss dem Oberbegriff des Anspruchs 1 die rechtwinkligen Farbkoordinaten in zylindrische Farbkoordinaten bzw. polare Farbkoordinaten umgerechnet werden.

Aus den DE-C-19 36 051 und DE-A-25 44 703 ist es auch schon bekannt, solche Koordinaten-Transformationen mittels analoger Funktionsgeneratoren vorzunehmen. Diese analogen Funktionsgeneratoren haben aber den Nachteil, dass sie aufwendig sind, instabil arbeiten und nur eine geringe Arbeitsgeschwindigkeit zulassen.

Offenbarung der Erfindung

Aufgabe der vorliegenden Erfindung ist es daher, ein Verfahren und eine Schaltungsanordnung zur Umwandlung von digitalen Chrominanz-Signalen eines rechtwinkligen Farbkoordinaten-Systems anzugeben, mit denen die Nachteile der bekannten analogen Funktionsgeneratoren vermieden werden.

Diese Aufgabe wird bei der vorliegenden Erfindung dadurch gelöst, dass durch den Mittelpunkt ($P'_0$) des polaren Farbkoordinaten-Systems (4) ein parallel zum ersten rechtwinkligen Farbkoordinaten-System (1) verlaufendes zweites rechtwinkliges Farbkoordinaten-System (8) gelegt wird, welches das polare Farbkoordinaten-System (4) in vier Quadranten unterteilt, dass den einzelnen Quadranten in Richtung wachsender Farbton-Signale (T) ansteigende digitale Quadranten-Kennummern derart zugeordnet werden, dass die Quadranten-Kennummern jeweils die höchstwertigen Bits der zu bestimmenden digitalen Farbton-Signale (T) sind, dass die Quadranten, in welche die digitalen Chrominanz-Signale (X; Y) fallen, festgestellt und die digitalen Quadranten-Kennummern der festgestellten Quadranten markiert werden, dass die digitalen Farbton-Signale (T*) und Sättigungs-Signale (S) eines ausgewählten Quadranten in einem Tabellen-Speicher in Abhängigkeit der digitalen Koordinatenwerte (X'; Y') des ausgewählten Quadranten nach den an sich bekannten Beziehungen:

$$S = c_1\sqrt{X'^2 + Y'^2}$$

und

$$T^* = c_2 \arctan \frac{Y'}{X'}$$

gespeichert werden, wobei $c_1$ und $c_2$ konstante Faktoren sind, dass die digitalen Chrominanz-Signale (X; Y) betragsmässig in die entsprechenden digitalen Koordinatenwerte (X'; Y') des ausgewählten Quadranten umgerechnet werden, dass der Tabellen-Speicher durch die ermittelten digitalen Koordinatenwerte (X'; Y') adressiert und die zugehörigen digitalen Farbton-Signale (T*) und Sättigungs-Signale (S) des ausgewählten Quadranten ausgelesen werden, dass die ausgelesenen digitalen Farbton-Signale (T*) in Abhängigkeit der markierten digitalen Quadranten-Kennummern invertiert werden, falls die festgestellten Quadranten der zweite oder vierte Quadrant ist, und dass die digitalen Farbton-Signale (T) für alle Quadranten aus den markierten digitalen Quadranten-Kennummern und den ausgelesenen digitalen Farbton-Signalen (T*) des ausgewählten Quadranten gebildet werden, wobei die markierten digitalen Quadranten-Kennummern jeweils die höchstwertigen Bits und die ausgelesenen Farbton-Signale (T*) des ausgewählten Quadranten die niederwertigen Bits der gebildeten Farbton-Signale (T) sind.

Eine vorteilhafte Schaltungsanordnung zur Umwandlung von digitalen Chrominanz-Signalen eines rechtwinkligen Farbkoordinaten-Systems in

digitale Farbton-Signale und Sättigungs-Signale eines polaren Farbkoordinaten-Systems unter Verwendung eines Speichers und einer Transformations-Schaltung (10), welche mit den digitalen Chrominanz-Signalen (X; Y) beaufschlagt ist, ist gekennzeichnet durch eine Quadranten-Erkennungsstufe (11), welche mit den hochwertigen Bits der digitalen Chrominanz-Signale (X; Y) beaufschlagt ist, einen adressierbaren Tabellen-Speicher (12), dessen Adresseneingänge an die Transformations-Schaltung (10) angeschlossen sind, und durch eine Invertierungs-Stufe (13), die mit einer Gruppe von Ausgängen des Tabellen-Speichers (12) in Verbindung steht, wobei durch den Mittelpunkt ($P'_0$) des polaren Farbkoordinaten-Systems (4) ein parallel zum ersten rechtwinkligen Farbkoordinaten-System (1) verlaufendes zweites rechtwinkliges Farbkoordinaten-System (8) gelegt ist, welches das polare Farbkoordinaten-System (4) in vier Quadranten unterteilt und wobei den einzelnen Quadranten in Richtung wachsender Farbton-Signale (T) ansteigende digitale Quadranten-Kennummern zugeordnet sind und in der die Schaltungselemente folgende Funktionen ausführen:

Feststellen derjenigen Quadranten, in welche die digitalen Chrominanz-Signale (X; Y) fallen, und Markieren der digitalen Quadranten-Kennummern der festgestellten Quadranten in der Quadranten-Erkennungsstufe (11),

Speichern der Sättigungs-Signale (S) und der Farbton-Signale (T*) eines ausgewählten Quadranten in dem Tabellen-Speicher (12) in Abhängigkeit der digitalen Koordinatenwerte (X'; Y') des ausgewählten Quadranten nach den an sich bekannten Beziehungen:

$$S = c_1\sqrt{X'^2 + Y'^2}$$

und $$T^* = c_2 \arctan \frac{Y'}{X'}$$

wobei $c_1$ und $c_2$ konstante Faktoren sind,

betragsmässige Umrechnung der digitalen Chrominanz-Signale (X; Y) in die entsprechenden digitalen Koordinatenwerte (X'; Y') des ausgewählten Quadranten in der Transformations-Schaltung (10), Adressieren des Tabellen-Speichers (12) durch die in der Transformations-Schaltung (10) erzeugten Koordinatenwerte (X'; Y') und Auslesen der zugehörigen Sättigungs-Signale (S) und der Farbton-Signale (T*) des ausgewählten Quadranten aus dem Tabellen-Speicher (12),

Invertieren der ausgelesenen digitalen Farbton-Signale (T*) in der Invertierungs-Stufe (13) in Abhängigkeit der in der Quadranten-Erkennungsstufe (11) markierten digitalen Quadranten-Kennummern, falls die festgestellten Quadranten der zweite oder vierte Quadrant ist, und

Bilden der digitalen Farbton-Signale (T) aller Quadranten aus den in der Quadranten-Erkennungsstufe (11) markierten digitalen Quadranten-Kennummern und aus den aus dem Tabellen-Speicher (12) ausgelesenen digitalen Farbton-Signalen (T*) des ausgewählten Quadranten, wobei die markierten digitalen Quadranten-Kennummern jeweils die höchstwertigen Bits und die ausgelesenen digitalen Farbton-Signale (T*) die niederwertigen Bits der gebildeten Farbton-Signale (T) sind.

Kurze Beschreibung der Erfindung

Die Erfindung wird im folgenden anhand der Figuren 1 bis 5 näher erläutert. Es zeigen:

Figur 1 eine räumliche Darstellung des Chrominanz-Luminanz-Farbraumes und des Farbton-Sättigungs-Luminanz-Farbraumes;

Figur 2 eine Projektion der Farbräume;

Figur 3 ein Ausführungsbeispiel für eine digitale Transformations-Schaltung;

Figur 4 ein weiteres Ausführungsbeispiel für eine digitale Transformations-Schaltung;

Figur 5 ein Ausführungsbeispiel für eine Korrektur-Stufe.

Bester Weg zur Ausführung der Erfindung

Zur Erläuterung der Koordinaten-Transformation zeigt Figur 1 ein rechtwinkliges (karthesisches) XYZ-Koordinatensystem 1 mit dem Koordinaten-Nullpunkt $P_0$. In dem XYZ-Koordinatensystem 1 ist der Chrominanz-Luminanz-Farbraum 2 aufgespannt. Ein beliebig angenommener Farbort F hat die Farbkoordinaten X, Y und Z.

Die Farbkoordinaten X und Y entsprechen den Chrominanz-Signalen und die Farbkoordinate Z dem Luminanz-Signal. Der Chrominanz-Luminanz-Farbraum 2 ist durch die Farbkoordinaten $X_n$, $Y_n$ und $Z_n$ begrenzt.

In das rechtwinklige XYZ-Koordinatensystem 1 ist ein zylindrisches TSL-Koordinatensystem 3 mit dem Koordinaten-Nullpunkt $P'_0$ einbeschrieben, der im XYZ-Koordinatensystem 1 die Farbkoordinaten $X_n/2$, $Y_n/2$ und 0 aufweist. Der Winkel T entspricht dem Farbton-Signal T, der Radius S dem Sättigungs-Signal S und die Koordinate L dem Luminanz-Signal L, das mit dem Luminanz-Signal im Chrominanz-Luminanz-Farbraum 2 identisch ist.

In dem zylindrischen TSL-Koordinatensystem 3 ist der idealisierte Farbton-Sättigungs-Luminanz-Farbraum 4 als Doppelkegel gestrichelt angedeutet. Durch den Koordinaten-Nullpunkt $P'_0$ verläuft die Grauachse 5 mit dem Weisspunkt 6 und dem Schwarzpunkt 7.

Figur 2 zeigt eine Projektion der räumlichen Koordinatensysteme nach Fig. 1 in die XY-Ebene, wodurch die Koordinaten-Transformation auf ein zweidimensionales Problem zurückgeführt und nunmehr das rechtwinklige XY-Koordinatensystem 1' und das polare TS-Koordinatensystem 4' betrachtet wird, da die Luminanz-Signale L in beiden Koordinatensystemen ohnehin identisch sind.

Durch den Koordinaten-Nullpunkt $P'_0$ des polaren TS-Koordinationsystems 4' verläuft ein gegenüber dem XY-Koordinatensystem 1', um die Werte $X_n/2$ und $Y_n/2$ verschobenes X'Y'-Koordinatensystem 8. Das X'Y'-Koordinatensystem 8 unterteilt das polare TS-Koordinatensystem 4' in Richtung aufsteigender Winkel T in die vier Quadranten 0, I, II und III, wobei der Winkel T = 0 auf die X'-Achse

fällt. Entsprechend dieser Numerierung sind den einzelnen Quadranten digitale Quadranten-Kennummern à 2-Bit zugeordnet, und zwar dem Quadranten 0 die Quadranten-Kennummer LL, dem Quadranten I die Quadranten-Kennummer LH, dem Quadranten II die Quadranten-Kennummer HL und dem Quadranten III die Quadranten-Kennummer HH.

Der in die XY-Ebene projizierte Farbort F ist in dem X'Y'-Koordinatensystem 8 durch die Farbkoordinaten X' und Y' und in dem polaren TS-Koordinatensystem 4' durch den Winkel T und den Radius S gekennzeichnet.

Zur Bestimmung des Winkels T und des Radius' S eines Farbortes F wird zunächst durch Untersuchung der Farbkoordinaten X und Y festgestellt, in welchen Quadranten der Farbort F fällt und die betreffende Quadranten-Kennummer markiert, wodurch die eigentliche Koordinatenberechnung in vorteilhafter Weise auf einen Haupt-Quadranten, im Ausführungsbeispiel auf den Quadranten 0, beschränkt wird.

Daher können in einem zweiten Schritt die Farbkoordinaten X' und Y' des zu untersuchenden Farbortes F betragsmässig ohne Zusatz eines Vorzeichens aus den entsprechenden Farbkoordinaten X und Y ermittelt werden. In einem weiteren Schritt werden aus den Farbkoordinaten X' und Y' die Radien S bzw. das gesuchte Sättigungs-Signal S nach der Gleichung:

$$S = c_1 \sqrt{X'^2 + Y'^2} \qquad (1)$$

und der zugehörige Winkel T* zunächst bezogen auf den Haupt-Quadranten 0 (Winkel 0° bis 90°) nach der Gleichung:

$$T^* = c_2 \cdot \arc\tan \frac{Y'}{X'} \qquad (2)$$

berechnet. Im Ausführungsbeispiel haben S und T* ein Auflösungsvermögen von 4 Bit, so dass insgesamt sechzehn Radien S und sechzehn Winkel T* pro Quadrant unterschieden werden können, die in Figur 2 für den Haupt-Quadranten 0 angedeutet sind.

Die Winkel T bzw. die gesuchten digitalen Farbton-Signale T für alle vier Quadranten (Winkel 0° bis 360°) ergeben sich aus dem berechneten Winkel T* à 4 Bit und der vorangestellten markierten Quadranten-Kennummer à 2 Bit, so dass bei einer Wortlänge von 6 Bit insgesamt vierundsechzig Winkel bzw. Farbton-Signale T unterschieden werden können.

Wurde beispielsweise der Winkel T* = HLLL (45°) und die digitale Quadranten-Kennummer LH (Quadrant I) ermittelt, so ergibt sich der tatsächliche Winkel T = LHHLLL (135°). In Figur 2 sind einige charakteristische Winkel T als 6-Bit-Worte angegeben, und zwar LLLLLL ≙ 0°; LLHLLL ≙ 45°; LHLLLL ≙ 90°; LHHLLL ≙ 135°; HLLLLL ≙ 180°; HLHLLL ≙ 225° und HHLLLL ≙ 270°.

Figur 3 zeigt ein Ausführungsbeispiel für eine digitale Koordinatentransformations-Schaltung zur Umrechnung der digitalen Chrominanz-Signale X und Y in die digitalen Farbton-Signale T und die digitalen Sättigungs-Signale S. Die Koordinatentransformations-Schaltung besteht aus einer Invertierungs-Stufe 10, einer Quadranten-Erkennungsstufe 11, einem Tabellen-Speicher 12 und aus einer weiteren Invertierungs-Stufe 13.

Die digitalen Chrominanz-Signale X und Y mögen im Ausführungsbeispiel eine Wortlänge von jeweils 8 Bit aufweisen, wobei die einzelnen Bits mit kleinen Buchstaben bezeichnet und deren Wertigkeiten durch Indizes angegeben sind. Bei der 8-Bit-Auflösung sind die Endwerte im XY-Koordinatensystem 1 $X_n = Y_n = 255$ und somit $X_n/2 = Y_n/2 = 127$.

Die höchstwertigen Bits (MSB) $x_7$ und $y_7$ der Chrominanz-Signale X und Y auf den Leitungen 14 und 15 werden in einem Exklusiv-ODER-Tor 16 und einem Inverter 17 der Quadranten-Erkennungsstufe 11 logisch ausgewertet. Die Ausgangssignale $t_4$ und $t_5$ der Quadranten-Erkennungsstufe 11 auf den Leitungen 18 und 19 bilden die digitalen Quadranten-Kennummern à 2-Bit derjenigen Quadranten, in welche die zu untersuchenden Farborte F fallen. Die Ausgangssignale $t_4$ und $t_5$ sind gleichzeitig die höchstwertigen Bits der zu bestimmenden digitalen Farbton-Signale T.

Wie aus Figur 2 ersichtlich ist, liefern die Werte $X \geq 128$ und $X < 128$ eine Aussage darüber, ob der zu untersuchende Farbort F rechts (Quadrant 0; III) oder links (Quadrant I; II) der Y'-Achse und die Werte $Y \geq 128$ und $Y < 128$ die entsprechende Aussage, ob der Farbort F oberhalb (Quadrant 0; I) oder unterhalb (Quadrant II; III) der X'-Achse liegt. Die betreffenden Quadranten werden durch Untersuchung der jeweils höchstwertigen Bits (MSB) $x_7$ und $y_7$ nach folgender Tabelle festgestellt:

$$\begin{aligned} X \geq 128 &\triangleq x_7 = H \text{ (Quadrant 0 oder III)} \\ X < 128 &\triangleq x_7 = L \text{ (Quadrant I oder II)} \\ Y \geq 128 &\triangleq y_7 = H \text{ (Quadrant 0 oder I)} \\ Y < 128 &\triangleq y_7 = L \text{ (Quadrant II oder III).} \end{aligned} \qquad (9)$$

Diese Beziehungen werden in dem Exklusiv-ODER-Tor 16 und dem Inverter 17 der Quadranten-Erkennungsstufe 11 nach folgender Wahrheitstabelle ausgewertet:

| MSB | | Q-K-Nr. | | Quadrant | |
|---|---|---|---|---|---|
| $x_7$ | $y_7$ | $t_4$ | $t_5$ | | |
| H | H | L | L | 0 | |
| L | H | H | L | I | (10) |
| L | L | L | H | II | |
| H | L | H | H | III | |

In der Invertierungs-Stufe 10 werden gemäss Figur 2 die digitalen Farbkoordinaten X' und Y' des X'Y'-Koordinatensystems 8 betragsmässig ohne Zusatz eines Vorzeichens ermittelt.

Dazu werden die restlichen Bits (LSB) $x_0$ bis $x_6$ des digitalen Chrominanz-Signals X in der Invertierungs-Stufe 10 auf eine erste Gruppe von sieben Exklusiv-ODER-Toren 20 bis 26 und die entsprechenden restlichen Bits $y_0$ bis $y_6$ des digitalen Chrominanz-Signals Y auf eine zweite Gruppe von weiteren sieben Exklusiv-ODER-Toren 27 bis 33

gegeben. Alle Exklusiv-ODER-Tore 20 bis 26 der ersten Gruppe sind mit einem Inverter 34 verbunden, in dem das höchstwertige Bit (MSB) $x_7$ des digitalen Chrominanz-Signals X invertiert wird. Alle Exklusiv-ODER-Tore 27 bis 33 der zweiten Gruppe sind an einem weiteren Inverter 35 angeschlossen, welcher das höchstwertige Bit (MSB) $y_7$ des digitalen Chrominanz-Signals Y invertiert. Die Bits $x'_0$ bis $x'_6$ an den Ausgängen der Exklusiv-ODER-Tore 20 bis 26 bzw. die Bits $y'_0$ bis $y'_6$ an den Ausgängen der Exklusiv-ODER-Tore 27 bis 33 bilden die digitalen Farbkoordinaten X' und Y' des verschobenen X'Y'-Koordinatensystems 8 nach Figur 2.

Mit Hilfe der Exklusiv-ODER-Tore 20 bis 26 bzw. 27 bis 33 erfolgt eine von den höchstwertigen Bits (MSB) $x_7$ bzw. $y_7$ gesteuerte Invertierung oder Nichtinvertierung aller niederwertigen Bits (LSB) $x_0$ bis $x_6$ bzw. $y_0$ bis $y_6$ der digitalen Chrominanz-Signale X und Y nach den Tabellen:

| $x_7$ | $x'$ | $y_7$ | $y'$ | |
|---|---|---|---|---|
| L | $\bar{x}_0$ bis $\bar{x}_6$ | L | $\bar{y}_0$ bis $\bar{y}_6$ | (11) |
| H | $x_0$ bis $x_6$ | H | $y_0$ bis $y_6$ | |

Ist beispielsweise das höchstwertige Bit $x_7 = L$, liegt der entsprechende Farbort F in Quadranten I oder II, und die Farbkoordinaten X' berechnen sich gemäss Figur 2 nach der Beziehung $X' = X - 127$, die im digitalen Bereich durch Weglassen des höchstwertigen Bits (MSB) und Invertierung aller niederwertigen Bits (LSB) realisiert wird. Ist dagegen $x_7 = H$, befindet sich der Farbort F im Quadranten 0 oder III, und die zugehörigen Farbkoordinaten X' ergeben sich nach den Gleichungen $X' = 128 - X$, die im digitalen Bereich durch Weglassen des höchstwertigen Bits (MSB) und Nichtinvertierung aller niederwertigen Bits (LSB) gelöst wird. Auf dieselbe Weise wird das Bit $y_7$ ausgewertet.

Die in der Invertierungs-Stufe 10 gewonnenen digitalen Farbkoordinaten X' und Y' à 7 Bit rufen über die Leitungen 36 die 14-Bit-Adressen des Tabellen-Speichers 12 auf. Im Tabellen-Speicher 12 mit einer Speicherkapazität von 16Kx8 ist für jede X'Y'-Wertekombination ein 4-Bit-Farbtonwert T* ($t_0$ bis $t_3$) und ein 4-Bit-Sättigungswert S ($s_0$ bis $s_3$) abgespeichert, die nach den angegebenen Gleichungen (1) und (2) für den Hauptquadranten berechnet wurden. Somit können in Abhängigkeit der X'Y'-Wertekombinationen sechzehn digitale Sättigungswerte S und sechzehn digitale Farbtonwerte T* pro Quadrant aus dem Tabellenspeicher 12 abgerufen werden.

Die aus dem Tabellen-Speicher 12 ausgelesenen Farbtonwerte T* bilden die niederwertigen Bits ($t_0$ bis $t_3$) und die in der Quadranten-Erkennungsstufe 11 gewonnenen Quadranten-Kennummern ($t_4$ und $t_5$) die hochwertigen Bits der gesuchten digitalen Farbton-Signale T mit einer Wortlänge von 6 Bit.

Falls der zu untersuchende Farbort F im Quadranten I oder III liegt, werden die digitalen Farbton-Signale T* in der Invertierungs-Stufe 13 invertiert, die mit dem Ausgang 37 des Tabellen-Speichers 12 verbunden ist. Die Invertierungs-Stufe 13 besteht aus vier Exklusiv-ODER-Toren 39 bis 42, welche über einen weiteren Inverter 43 vom Ausgangssignal $t_4$ der Quadranten-Erkennungsstufe 11 gesteuert werden.

Durch die gesteuerte Invertierung wird erreicht, dass die Farbtonsignale T* von 0 bis 63 bzw. die Winkel von 0 bis 360° von Quadrant zu Quadrant stetig ansteigen.

Figur 4 zeigt ein weiteres Ausführungsbeispiel einer Koordinatentransformations-Schaltung. Während der Tabellen-Speicher 12 bei der Ausführungsform nach Figur 3 eine Kapazität von 16K × 8 Bit aufweist, hat der Tabellen-Speicher 12' in Figur 4 eine geringere Kapazität, z.B. von 1 K × 8 Bit. Die geringere Kapazität hat unter anderem den Vorteil, dass die Zugriffszeit kürzer und damit die Arbeitsgeschwindigkeit der Koordinatentransformations-Schaltung grösser ist.

Während die in der Invertierungs-Stufe 10 gewonnenen Farbkoordinaten X' und Y' nach wie vor als zweimal 7-Bit-Informationen vorliegen, können bei dem kleinen Tabellen-Speicher 12' nur zweimal 5-Bit-Adressen angewählt werden. In diesem Falle müssten die niederwertigen Bits der Farbkoordinaten X' und Y' unberücksichtigt bleiben, was aber zu einer ungenauen Koordinatenumrechnung führen würde.

Zur Verbesserung der Genauigkeit, insbesondere bei der Berechnung der digitalen Farbton-Signale T aus kleinen Farbkoordinatenwerten X' und Y', ist dem Tabellen-Speicher 12' erfindungsgemäss eine steuerbare Verschiebe-Stufe 46 (Shifter) vorgeschaltet. Mit der Verschiebe-Stufe 46 wird eine aufwärts gerichtete Stellenverschiebung der Farbkoordinaten X' und Y' gemäss einer Multiplikation um einen Faktor «a» durchgeführt, wobei die Anzahl der Stellen, um die verschoben wird, von Wertebereichen A, B und C für die digitalen Farbkoordinaten X' und Y' abhängig ist. Nach einer Stellenverschiebung wird der Tabellen-Speicher 12' nicht mehr durch die Farbkoordinaten X' und Y', sondern von den vergrösserten Farbkoordinaten $X'' = aX'$ und $Y'' = aY'$ adressiert. In diesem Falle ergeben sich die digitalen Farbton-Signale T* und Sättigungs-Signale S nach den Beziehungen:

$$S = c_1\sqrt{(\alpha X')^2 + (\alpha')^2}$$
$$S = c1 \cdot a\sqrt{X'^2 + Y'^2} \qquad (12)$$

$$\text{und } T^* = c_2 \cdot \text{arc tan } \frac{ay'}{ax'} \qquad (13)$$

Die Wertebereiche A, B und C sind in der Figur 2 für den Quadranten I eingetragen. In den Wertebereich A fallen kleine, in den Wertebereich B mittlere und in den Wertebereich C grosse Werte von X' und Y'.

Im Wertebereich A stellt die Verschiebe-Schaltung 46 folgende Verbindungen her:

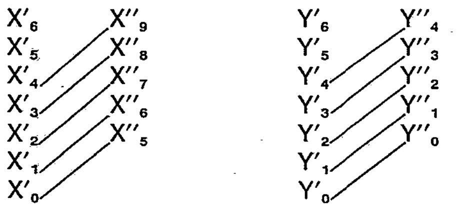

(14)

Die digitalen Farbkoordinaten X' und Y' werden um zwei Stellen aufwärts geschoben (a = 4). Die niederwertigen Bits $x'_0$ und $x'_1$ sowie $y'_0$ und $Y'_1$ werden ausgewertet. Die hochwertigen Bits $x'_6$ und $x'_5$ sowie $y'_6$ und $y'_5$ werden nicht berücksichtigt, da sie ohnehin 0 sind.

Im Wertebereich B stellt die Verschiebe-Schaltung 46 folgende Verbindung her:

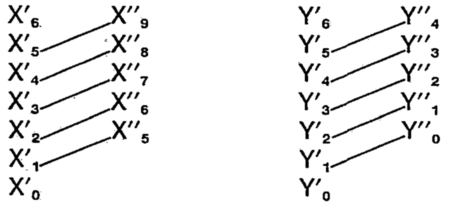

(15)

Die digitalen Farbkoordinaten X' und Y' werden um eine Stelle aufwärts geschoben (a = 2). In diesem Fall gehen jeweils nur die niederwertigen Bits $x'_0$ und $y'_0$ der Farbkoordinaten verloren. Ihre hochwertigen Bits $x'_6$ und $y'_6$ können unberücksichtigt bleiben, da sie 0 sind.

Im Wertebereich C werden durch die Verschiebe-Schaltung 46 folgende Verbindungen hergestellt:

| | | | | |
|---|---|---|---|---|
| $X'_6$ —— $X''_9$ | | $Y'_6$ —— $Y''_4$ | | |
| $X'_5$ —— $X''_8$ | | $Y'_5$ —— $Y''_3$ | | |
| $X'_4$ —— $X''_7$ | | $Y'_4$ —— $Y''_2$ | | |
| $X'_3$ —— $X''_6$ | | $Y'_3$ —— $Y''_1$ | | (16) |
| $X'_2$ —— $X''_5$ | | $Y'_2$ —— $Y''_0$ | | |
| $X'_1$ | | $Y'_1$ | | |
| $X'_0$ | | $Y'_0$ | | |

Die digitalen Farbkoordinaten X' und Y' werden geradeaus durchgeschaltet (a = 1) und die niederwertigen Bits $x'_0$ und $x'_1$ sowie $y'_0$ und $y'_1$ abgeworfen.

Als Verschiebe-Stufe 46 kann beispielsweise ein integrierter Four-Bit-Shifter vom Typ Am25S10 der Firma Advanced Micro Devices, Inc. Verwendung finden. Diese Bausteine werden von 2-Bit-Verschiebebefehlen $V_1$ und $V_2$ an einen Steuereingang 37 nach folgender Tabelle gesteuert:

| Wertebereich | Verschiebung | Verschiebe-Befehl | | |
|---|---|---|---|---|
| | | $V_1$ | $V_2$ | |
| A | 2× | H | L | |
| B | 1× | L | H | (17) |
| C | 0 | L | L | |

Die Wertebereiche A, B und C können durch die Bits $x'_4$, $x'_5$, $x'_6$, $y'_4$, $y'_5$ und $y'_6$ der digitalen Farbkoordinaten X' und Y' definiert werden. Diese Bits adressieren einen Festwertspeicher 48 (PROM) nach einer Verknüpfung der Bits $x'_6$ und $y'_6$ in einem ODER-Tor 49 über die Adresseneingänge 50. In dem Festwertspeicher 48 sind die Verschiebebefehle $V_1$ und $V_2$ in Abhängigkeit der Wertebereiche A, B und C gespeichert. Diese Verschiebebefehle gelangen über eine Leitung 51 an die Steuereingänge 47 der Verschiebe-Stufe 46.

Wie aus den angegebenen Gleichungen (12) und (13) hervorgeht, ergeben sich für die Wertebereiche A und B digitale Sättigungs-Signale S, die um den Faktor «a» zu gross sind und korrigiert werden müssen. Aus diesem Grunde ist dem Ausgang 38 des Tabellen-Speichers 12' eine entsprechende Korrektur-Stufe 52 nachgeschaltet, die ebenfalls von den Verschiebebefehlen $V_1$ und $V_2$ auf den Leitungen 51 über die Steuereingänge 53 gesteuert wird. Die Korrektur-Stufe 52 nimmt eine abwärts gerichtete Stellenverschiebung vor, die einer Division durch den Faktor «a» entspricht.

Die Korrektur-Stufe 52 kann entweder als Verschiebe-Stufe (Shifter), die in ihrer Wirkungsweise der Verschiebe-Stufe 46 entspricht, oder aber gemäss Figur 5 ausgebildet sein.

Anstelle des Tabellen-Speichers 12 in Figur 3 mit einer Kapazität von 16K × 8Bit oder des Tabellen-Speichers 12' in Figur 4 mit einer Kapazität von 1K × 8Bit könnten selbstverständlich auch zwei getrennte Tabellen-Speicher mit jeweils 16K × 4Bit bzw. 1K × 4Bit verwendet werden, wobei in dem ersten Tabellenspeicher die digitalen Farbton-Signale T und in dem zweiten Tabellenspeicher die digitalen Sättigungssignale S abgespeichert sind.

In diesem Falle könnte eine Variante der in Figur 4 dargestellten Koordinaten-Transformations-Schaltung darin bestehen, dass nur dem ersten Tabellenspeicher die Verschiebe-Schaltung 46 vorgeschaltet wird, während der zweite Tabellenspeicher direkt von der Invertierungs-Stufe 10 adressiert wird. Dann müssten allerdings jeweils die niederwertigen Bits $x'_0$ und $x'_1$ sowie $y'_0$ und $y'_1$ der Farbkoordinaten X' und Y' abgeworfen werden, wodurch die Koordinatenberechnung ungenauer wird. Die Variante hätte aber den Vorteil, dass eine Korrektur der Sättigungs-Signale S entfallen könnte. Die Rundung des Ergebnisses könnte mit in den zweiten Tabellenspeicher einprogrammiert werden.

Eine vorteilhafte Ausführungsform der Korrektur-Stufe 52 zeigt Figur 5.

Die Korrekturstufe 52 besteht im wesentlichen aus vier steuerbaren Gattern 54 bis 57 und aus einem programmierbaren Festwertspeicher 58 (PROM).

Die Gatter 54 bis 57 (z.B. vom Typ SN74LS244 der Firma Texas Instruments) stehen mit den Ausgängen 38 des Tabellen-Speichers 12' in Verbindung. Die Gatter weisen 3-State-Ausgänge auf, deren Zustände von einem Freischalt-Eingang 59 her derart gesteuert werden, dass die Leitungen bei einem log. «L» am Freischalt-Eingang 59

durchgeschaltet (Ausgang niederohmig) und bei einem log. «H» gesperrt (Ausgang hochohmig) sind.

Der Festwertspeicher 58 (z.B. vom Typ SN74S288) mit einer Kapazität von 32 × 8Bit weist ebenfalls 3-State-Ausgänge auf, deren Zustände von einem Freischalt-Eingang 61 her gesteuert werden. Da sowohl die Gatter als auch der Festwertspeicher 3-State-Ausgänge aufweist, können die Ausgangsleitungen unmittelbar verbunden werden.

Der Festwertspeicher 58 hat zwei Speicherbereiche à 16 Bit, in denen jeweils die durch a = 4 bzw. a = 2 dividierten und gegebenenfalls gerundeten Daten des Tabellen-Speichers 12′ abgelegt sind. Diese Daten werden über vier der 5-Bit-Adress-Eingänge 60, die mit den Ausgängen 38 des Tabellen-Speichers 12′ verbunden sind, angewählt. Die Auswahl des Speicherbereiches erfolgt über den fünften Adress-Eingang 60′.

Die Steuereingänge 53 der Korrektur-Stufe 52, an denen die Verschiebebefehle $V_1$ und $V_2$ erscheinen, stehen über ein ODER-Tor 63 mit dem Freischalt-Eingang 59 der Gatter 54 bis 57 und über einen Inverter 64 mit dem Freischalt-Eingang 61 des Festwertspeichers 58 in Verbindung. Der Adress-Eingang 60′ des Festwertspeichers 58 ist mit dem Verschiebebefehl $V_1$ als Steuerbit beaufschlagt.

Die Wirkungsweise der Korrekturstufe 52 ist folgende. Für den Fall, dass in der Verschiebe-Schaltung 46 keine Stellenverschiebung stattgefunden hat (siehe Tabelle 17; $V_1 = V_2 = L$), sind die Gatter 54 bis 57 durchgeschaltet, und es findet keine Korrektur der aus dem Tabellen-Speicher 12′ ausgelesenen digitalen Sättigungs-Signale S* statt. Falls aber in der Verschiebe-Schaltung 46 eine Stellenverschiebung um «1» oder «2» durchgeführt wurde (Tabelle 17; $V_1$ = H oder L; $V_2$ = L oder H), sind die Gatter 54 bis 57 gesperrt und die Ausgänge 62 des Festwertspeichers 58 wirksam. Dann adressieren die aus dem Tabellen-Speicher 12′ ausgelesenen digitalen Sättigungs-Signale S* den Festwertspeicher 58, und der Verschiebebefehl $V_1$ am Adress-Eingang 60′ entscheidet als Steuerbit darüber, ob die durch den Faktor «2» oder «4» dividierten und damit korrigierten Sättigungs-Signale S aus dem Festwertspeicher 58 ausgelesen werden.

Gewerbliche Verwertbarkeit

Die Erfindung kann in allen Gebieten verwertet werden, in denen rechtwinklige in polare Farbkoordinaten umzurechnen sind. Sie findet mit Vorteil auf dem Gebiet der elektronischen Reproduktionstechnik, insbesondere bei der Farbkorrektur und Farberkennung Anwendung.

**Patentansprüche**

1. Verfahren zur Umwandlung von digitalen Chrominanz-Signalen eines rechtwinkligen Farbkoordinaten-Systems in digitale Farbton-Signale und Sättigungs-Signale eines polaren Farbkoordinaten-Systems, dadurch gekennzeichnet, dass

a) durch den Mittelpunkt ($P'_0$) des polaren Farbkoordinaten-Systems (4) ein parallel zum ersten rechtwinkligen Farbkoordinaten-System (1) verlaufendes zweites rechtwinkliges Farbkoordinaten-System (8) gelegt wird, welches das polare Farbkoordinaten-System (4) in vier Quadranten unterteilt,

b) den einzelnen Quadranten in Richtung wachsender Farbton-Signale (T) ansteigende digitale Quadranten-Kennummern derart zugeordnet werden, dass die Quadranten-Kennummern jeweils die höchstwertigen Bits der zu bestimmenden digitalen Farbton-Signale (T) sind,

c) die Quadranten, in welche die digitalen Chrominanz-Signale (X; Y) fallen, festgestellt und die digitalen Quadranten-Kennummern der festgestellten Quadranten markiert werden,

d) die digitalen Farbton-Signale (T*) und Sättigungs-Signale (S) eines ausgewählten Quadranten in einem Tabellen-Speicher in Abhängigkeit der digitalen Koordinatenwerte (X′; Y′) des ausgewählten Quadranten nach den an sich bekannten Beziehungen

$$S = c_1\sqrt{X'^2 + Y'^2}$$

und $$T^* = c_2 \arctan \frac{Y'}{X'}$$

gespeichert werden, wobei $c_1$ und $c_2$ konstante Faktoren sind,

e) die digitalen Chrominanz-Signale (X; Y) betragsmässig in die entsprechenden digitalen Koordinatenwerte (X′; Y′) des ausgewählten Quadranten umgerechnet werden,

f) der Tabellen-Speicher durch die ermittelten digitalen Koordinatenwerte (X′; Y′) adressiert und die zugehörigen digitalen Farbton-Signale (T*) und Sättigungs-Signale (S) des ausgewählten Quadranten ausgelesen werden,

g) die ausgelesenen digitalen Farbton-Signale (T*) in Abhängigkeit der markierten digitalen Quadranten-Kennummer invertiert werden, falls die festgestellten Quadranten der zweite oder vierte Quadrant ist, und

h) die digitalen Farbton-Signale (T) für alle Quadranten aus den markierten digitalen Quadranten-Kennummern und den ausgelesenen digitalen Farbton-Signalen (T*) des ausgewählten Quadranten gebildet werden, wobei die markierten digitalen Quadranten-Kennummern jeweils die höchstwertigen Bits und die ausgelesenen Farbton-Signale (T*) des ausgewählten Quadranten die niederwertigen Bits der gebildeten Farbton-Signale (T) sind.

2. Verfahren nach Anspruch 1, dadurch gekennzeichnet, dass die Koordinaten des Mittelpunktes ($P'_0$) und der maximale Radius des polaren Farbkoordinaten-Systems (4) den halben Endwerten ($X_n$; $Y_n$) der digitalen Chrominanz-Signale (X; Y) in dem ersten rechtwinkligen Farbkoordinaten-System (1) entsprechen.

3. Verfahren nach Anspruch 1 oder 2, dadurch gekennzeichnet, dass die digitalen Quadranten-Kennummern durch eine logische Verknüpfung

der jeweils höchstwertigen Bits (MSB) der digitalen Chrominanz-Signale (X; Y) ermittelt werden.

4. Verfahren nach einem der Ansprüche 1–3, dadurch gekennzeichnet, dass

a) die betragsmässige Umrechnung der Chrominanz-Signale (X bzw. Y) in die digitalen Koordinatenwerte (X′ bzw. Y′) durch Weglassen der jeweiligen höchstwertigen Bits (MSB) und Invertierung aller niederwertigen Bits (LSB) der digitalen Chrominanz-Signale (X bzw. Y) erfolgt, falls die betreffenden Chrominanz-Signale (X bzw. Y) links der Y′-Achse bzw. unterhalb der X′-Achse des zweiten Farbkoordinaten-Systems (8) liegen, und

b) die betragsmässige Umrechnung der Chrominanz-Signale (X bzw. Y) in die digitalen Koordinatenwerte (X′ bzw. Y′) durch Weglassen der jeweiligen höchstwertigen Bits (MSB) und Nichtinvertierung aller niederwertigen Bits (LSB) der digitalen Chrominanz-Signale (X bzw. Y) erfolgt, falls die betreffenden Chrominanz-Signale (X bzw. Y) rechts der Y′-Achse bzw. oberhalb der X′-Achse des zweiten Farbkoordinaten-Systems (8) liegen.

5. Verfahren nach einem der Ansprüche 1–4, dadurch gekennzeichnet, dass

a) die digitalen Koordinatenwerte (X′; Y′) vor der Adressierung des Tabellen-Speichers einer Stellenverschiebung unterzogen werden, und

b) die Stellenverschiebung bei den aus dem Tabellen-Speicher ausgelesenen Werten wieder rückgängig gemacht wird.

6. Verfahren nach Anspruch 5, dadurch gekennzeichnet, dass die Anzahl der Stellen, um welche die digitalen Koordinatenwerte (X′; Y′) verschoben werden, von deren Grösse abhängig ist.

7. Verfahren nach Anspruch 5 oder 6, dadurch gekennzeichnet, dass die digitalen Koordinatenwerte (X′; Y′) in Wertebereiche unterteilt und in jedem Wertebereich eine entsprechende Stellenverschiebung vorgenommen wird.

8. Schaltungsanordnung zur Umwandlung von digitalen Chrominanz-Signalen eines rechtwinkligen Farbkoordinaten-Systems in digitale Farbton-Signale und Sättigungs-Signale eines polaren Farbkoordinaten-Systems unter Verwendung eines Speichers und einer Transformations-Schaltung (10), welche mit den digitalen Chrominanz-Signalen (X; Y) beaufschlagt ist, gekennzeichnet durch

a) eine Quadranten-Erkennungsstufe (11), welche mit den hochwertigen Bits der digitalen Chrominanz-Signale (X; Y) beaufschlagt ist;

b) einen adressierbaren Tabellen-Speicher (12), dessen Adresseneingänge an die Transformations-Schaltung (10) angeschlossen sind; und

c) eine Invertierungs-Stufe (13), die mit einer Gruppe von Ausgängen des Tabellen-Speichers (12) in Verbindung steht,

wobei durch den Mittelpunkt ($P'_0$) des polaren Farbkoordinaten-Systems (4) ein parallel zum ersten rechtwinkligen Farbkoordinaten-System (1) verlaufendes zweites rechtwinkliges Farbkoordinaten-System (8) gelegt ist, welches das polare Farbkoordinaten-System in vier Quadranten unterteilt, wobei den einzelnen Quadranten in Richtung wachsender Farbton-Signale (T) ansteigende digitale Quadranten-Kennummern zugeordnet sind und wobei die Schaltungselemente der Anordnung folgende Funktionen ausführen:

α) Feststellen derjenigen Quadranten, in welche die digitalen Chrominanz-Signale (X; Y) fallen und Markieren der digitalen Quadranten-Kennummern der festgestellten Quadranten in der Quadranten-Erkennungsstufe (11),

β) Speichern der Sättigungs-Signale (S) und der Farbton-Signale (T*) eines ausgewählten Quadranten in dem Tabellen-Speicher (12) in Abhängigkeit der digitalen Koordinatenwerte (X′; Y′) des ausgewählten Quadranten nach den an sich bekannten Beziehungen:

$$S = c_1\sqrt{X'^2 + Y'^2}$$

und $$T^* = c_2 \arctan \frac{Y'}{X'}$$

wobei $c_1$ und $c_2$ konstante Faktoren sind,

γ) betragsmässige Umrechnung der digitalen Chrominanz-Signale (X; Y) in die entsprechenden digitalen Koordinatenwerte (X′; Y′) der ausgewählten Quadranten in der Transformations-Schaltung (10),

δ) Adressieren des Tabellen-Speichers (12) durch die in der Transformations-Schaltung (10) erzeugten Koordinatenwerte (X′; Y′) und Auslesen der zugehörigen Sättigungs-Signale (S) und der Farbton-Signale (T*) des ausgewählten Quadranten aus dem Tabellen-Speicher (12),

ε) Invertieren der ausgelesenen digitalen Farbton-Signale (T*) in der Invertierungsstufe (13) in Abhängigkeit der in der Quadranten-Erkennungsstufe (11) markierten digitalen Quadranten-Kennummern, falls die festgestellten Quadranten der zweite oder vierte Quadrant ist, und

ζ) Bilden der digitalen Farbton-Signale (T) aller Quadranten aus den in der Quadranten-Erkennungsstufe (11) markierten digitalen Quadranten-Kennummern und aus den aus dem Tabellen-Speicher (12) ausgelesenen digitalen Farbton-Signalen (*) des ausgewählten Quadranten, wobei die markierten digitalen Quadranten-Kennummern jeweils die höchstwertigen Bits und die ausgelesenen digitalen Farbton-Signale (T*) die niederwertigen Bits der gebildeten Farbton-Signale (T) sind.

9. Schaltungsanordnung nach Anspruch 8, dadurch gekennzeichnet, dass die Transformations-Schaltung (10) als ein von den jeweils höchstwertigen Bits der digitalen Chrominanz-Signale (X; Y) gesteuerter Inverter für deren niederwertige Bits ausgebildet ist.

10. Schaltungsanordnung nach Anspruch 8 oder 9, dadurch gekennzeichnet, dass

a) zwischen der Transformations-Schaltung (10) und dem Tabellen-Speicher (12′) eine steuerbare Verschiebe-Stufe (46) zur Stellenverschiebung der Koordinatenwerte (X′; Y′) angeordnet ist,

b) dem Tabellen-Speicher (12′) eine steuerbare Korrektur-Stufe (52) für die Sättigungs-Signale (S) nachgeschaltet ist, um die Stellenverschiebung rückgängig zu machen, und

c) die Steuereingänge der Verschiebe-Stufe (46) und der Korrektur-Stufe (52) mit einem Steuergenerator (48) verbunden sind, der mit den digitalen Koordinatenwerten (X'; Y') beaufschlagt ist.

## Claims

1. Method for converting digital chrominance signals of an orthogonal colour co-ordinate system into digital colour hue signals and saturation signals of a polar colour co-ordinate system, characterised in that

a) the centre ($P'_0$) of the polar colour co-ordinate system (4) has laid through it a second orthogonal colour co-ordinate system (8) extending parallel to the first orthogonal colour co-ordinate system (1), which devides the polar colour co-ordinate system (4) into four quadrants,

b) the individual quadrants have digital code numbers rising in the direction of intensifying colour hue signals (T) allocated to them, in a manner such that the quadrant code numbers in each case consists of the high order bits of the digital colour hue signals (T) which are to be determined,

c) the quadrants wherein appear the digital chrominance signals (X; Y) are determined and the digital quadrant code numbers of the quadrants determined are marked,

d) the digital colour hue signals (T*) and saturation signals (S) of a selected quadrant are stored in a table memory as a function of the digital co-ordinate values (X'; Y') of the selected quadrant according to the relationships known per se

$$S = c_1\sqrt{X'^2+Y'^2}$$

and $$T^* = c_2 \arc \tan \frac{Y'}{X'}$$

$c_1$ and $c_2$ being constant factors,

e) the digital chrominance signals (X; Y) are recalculated quantitatively into the corresponding digital co-ordinate values (X'; Y') of the selected quadrant,

f) the table memory is addressed by the digital co-ordinate values (X'; Y') determined and the corresponding digital colour hue signals (T*) and saturation signals (S) of the quadrant selected are read out,

g) the digital colour hue signals (T*) read out are inverted as a function of the marked digital quadrant code number, if the quadrants determined are the second or fourth quadrant, and

h) the digital colour hue signals (T) are obtained for all quadrants from the marked digital quadrant code numbers and the digital colour hue signals (T*) of the selected quadrant which are read out, the marked digital quadrant code numbers in each case being the high order bits and the colour hue signals (T*) of the selected quadrant which are read out being the low order bits of the colour hue signals (T) generated.

2. Method according to claim 1, characterised in that the co-ordinates of the centre ($P'_0$) and the maximum radius of the polar colour co-ordinate systems (4) correspond to half the final values ($X_n$; $Y_n$) of the digital chrominance signals (X; Y) in the first orthogonal colour co-ordinate system (1).

3. Method according to claim 1 and 2, characterised in that the digital quadrant code numbers are determined by a logical interlinkage of the most significant bits (MSB) in each case, of the digital chrominance signals (X; Y).

4. Method according to one of the claims 1–3, characterised in that

a) the quantitative conversion of the chrominance signals (X and Y, respectively) into the digital co-ordinate values (X' and Y' respectively), is performed by omitting the most significant bits (MSB) and inverting all low order bits of the digital chrominance signals (X and Y, respectively), if the chrominance signals (X and y respectively) in question are situated to the left of the Y' axis or below the X' axis of the second colour co-ordinate system (8), and

b) the quantitative conversion of the chrominance signals (X and Y, respectively) into the digital co-ordinate values (X'; Y' respectively) is performed by omitting the most significant bits (MSB) in each case and by not inverting all the low-order bits of the digital chrominance signals (X and Y, respectively) if the chrominance signals (X and Y, respectively) are situated to the right of the Y' axis or above the X' axis of the second colour co-ordinate system (8).

5. Method according to one of the claims 1 to 4, characterised in that

a) the digital co-ordinate values (X'; Y') are shifted prior to the addressing of the table memory, and

b) the shifting is reversed again in the case of the values read out of the table memory.

6. Method according to claim 5, characterised in that the number of digits by which the digital co-ordinate values (X'; Y') are shifted depends on their quantity.

7. Method according to claim 5 or 6, characterised in that the digital co-ordinate values (X'; Y') are subdivided into value ranges and that a corresponding shifting is performed in each value range.

8. Circuitry for converting digital chrominance signals of an orthogonal colour co-ordinate system into digital colour hue signals and saturation signals of a polar colour co-ordinate system under application of a memory and of a converter circuit (10) which is acted upon by the digital chrominance signals (X; Y), characterised in that

a) it comprises a quadrant recognition stage (11) which is acted upon by the high order bits of the digital chrominance signals (X; Y);

b) it comprises an addressable table memory (12) whereof the address inputs are connected to the converter circuit (10);

c) it comprises an inverter stage (13) which is in communication with a group of outputs of the table memory (12),

the centre ($P'_0$) of the polar colour co-ordinate system (4) having placed through it a second orthogonal colour co-ordinate system (8) extending parallel to the first orthogonal colour co-ordinate system (1) and dividing the polar colour co-ordinate system into four quadrants, digital quadrant code numbers increasing in the direction of intensifying colour hue signals being allocated to the separate quadrants, and the circuit elements of the system performing the following tasks:

α) determining the quadrants in which the digital chrominance signals (X; Y) are situated, and marking of the digital quadrant code numbers of the quadrants determined in the quadrant recognition stage (11),

β) storing the saturation signals (S) and the colour hue signals (T*) of a selected quadrant in the table memory (12) as a function of the digital co-ordinate values (X'; Y') of the selected quadrant in accordance with the following relationships known per se

$$S = c_1\sqrt{X'^2 + Y'^2}$$

and $$T^* = c_2 \arc \tan \frac{Y'}{X'}$$

$c_1$ and $c_2$ being constant factors,

γ) quantitatively converting the digital chrominance signals (X; Y) into the corresponding digital co-ordinate values (X'; Y') of the selected quadrants in the converter circuit (10),

δ) addressing the table memory (12) by the co-ordinate values (X'; Y') generated in the converter circuit (10) and reading the corresponding saturation signals (S) and the colour hue signals (T*) of the selected quadrant out of the table memory (12),

ε) inverting the digital colour hue signals (T*) read out in the inverter stage (13) as a function of the digital quadrant code numbers marked in the quadrant recognition stage (11), if the quadrants determined are the second or fourth quadrant, and

ζ) forming the digital colour hue signals (T) of all quadrants from the digital quadrant code numbers marked in the quadrant recognition stage (11) and from the digital colour hue signals (T*) of the selected quadrant which are read out of the table memory (12), the marked digital quadrant code numbers being the high order bits in each case and the digital colour hue signals (T*) read out being the low order bits of the colour hue signals (T) generated.

9. Circuitry according to claim 8, characterised in that the converter circuit (10) is constructed as an inverter driven by the most significant bits of the digital chrominance signals (X; Y) in each case, for their low order bits.

10. Circuitry according to claim 8 or 9, characterised in that

a) a controllable shifting stage (46) for shifting of the co-ordinate values (X'; Y') is situated between the converter stage (10) and the table memory (12),

b) a controllable corrector stage (52) for reversal of the shifting, intended for the saturation signals (S), is post-connected to the table memory (12), and

c) the control inputs of the shifting stage (46) and of the corrector stage (52) are connected to a control generator (48) which is acted upon by the digital co-ordinate values (X'; Y').

**Revendications**

1. Procédé pour convertir des signaux numériques de chrominance d'un système de coordonnées rectangulaires de couleurs en signaux numériques de teinte de couleurs et en signaux numériques de saturation d'un système de coordonnées polaires de couleurs, procédé caractérisé en ce que:

a) par le centre ($P'_0$) du système de coordonnées polaires de couleurs (4), est positionné un second système de coordonnées rectangulaires de couleurs (8) s'étendant parallèlement au premier système de coordonnées rectangulaires de couleurs (1), et qui subdivise le système de coordonnées polaires de couleurs (4) en quatre cadrans,

b) des numéros caractéristiques de cadrans croissant dans le sens des signaux de teinte de couleurs (T) croissants, sont associés sous forme numérique aux différents cadrans de sorte que ces numéros caractéristiques de cadrans sont respectivement les chiffres binaires de valeurs maximales des signaux numériques de teinte de couleurs (T) à déterminer,

c) les cadrans dans lesquels tombent les signaux numériques de chrominance (X; Y) sont déterminés et les numéros caractéristiques numériques de cadrans des cadrans ainsi déterminés sont repérés,

d) les signaux numériques de teinte de couleurs (T*) et les signaux de saturation (S) d'un cadran sélectionné, sont emmagasinés dans une mémoire à tableaux en fonction des valeurs de coordonnées numériques (X', Y') du cadran ainsi sélectionné selon les relations connues en soi:

$$S = c_1\sqrt{X'^2 + Y'^2}$$

et $$T^* = c_2 \arc \tan \frac{Y'}{X'}$$

$c_1$ et $c_2$ étant des facteurs constants.

e) les signaux numériques de chrominance (X; Y) sont calculés en valeurs dans les valeurs de coordonnées numériques correspondantes (X'; Y') du cadran sélectionné,

f) la mémoire à tableaux est adressée par les valeurs numériques de coordonnées (X'; Y') ainsi déterminées, et les signaux numériques de teinte de couleurs (T*) ainsi que les signaux de saturation (S) du cadran sélectionné sont lus,

g) les signaux numériques de teinte de couleurs (T*) lus sont inversés en fonction des numéros caractéristiques de cadran repérés numériquement, au cas où le cadran déterminé est le second ou le quatrième cadran,

h) les signaux numériques de teinte de couleurs (T) sont constitués pour tous les cadrans à partir des numéros caractéristiques de cadrans repérés sous forme numérique et des signaux numériques de teinte de couleurs lus (T*) du cadran sélectionné, les numéros caractéristiques repérés sous forme numérique des cadrans étant respectivement les chiffres binaires de valeurs maximales, tandit que les signaux de teinte de couleurs lus (T*) du cadran sélectionné sont les chiffres binaires de valeur minimale des signaux de teinte de couleurs formés (T).

2. Procédé selon la revendication 1, caractérisé en ce que les coordonnées du centre ($P'_0$) ainsi que le rayon maximal du système de coordonnées polaires (4) correspondent à la moitié des valeurs finales ($X_n$; $Y_n$) des signaux numériques de chrominance (X; Y) dans le premier système de coordonnées rectangulaires de couleurs (1).

3. Procédé selon revendication 1 ou 2, caractérisé en ce que les numéros caractéristiques mis sous forme numérique des cadrans, sont déterminés par une combinaison logique des chiffres binaires de valeurs respectivement maximales (MSB) des signaux numériques de chrominance (X; Y).

4. Procédé selon une des revendications 1 à 3, caractérisé en ce que:

a) le calcul en valeurs des signaux de chrominance (X ou bien Y) dans les valeurs numériques de coordonnées (X′ ou bien Y′) s'effectue en mettant de côté les chiffres binaires respectifs de valeurs maximales (MSB) et en inversant tous les chiffres binaires de valeurs minimales (LSB) des signaux numériques de chrominance (X ou bien Y), dans le cas où les signaux de chrominance concernés (X ou bien Y) se trouvent à gauche de l'axe des Y′ ou bien au-dessous de l'axe des X′ du second système de coordonnées rectangulaires de couleurs (8),

b) le calcul en valeurs des signaux de chrominance (X ou bien Y) dans les valeurs numériques de coordonnées (X′ ou bien Y′) s'effectue en mettant de côté les chiffres binaires respectifs de valeurs maximales (MSB) et sans inverser tous les chiffres binaires de valeurs minimales (LSB) des signaux numériques de chrominance (X ou bien Y), dans le cas où les signaux de chrominance concernés (X ou bien Y) se situent à droite de l'axe des Y′ ou bien au-dessus de l'axe des X′ du second système de coordonnées rectangulaires de couleurs (8).

5. Procédé selon une des revendications 1 à 4, caractérisé en ce que:

a) les valeurs numériques de coordonnées (X′; Y′) avant l'adressage de la mémoire à tableaux, sont soumises à un décalage d'emplacement,

b) le décalage d'emplacement pour les valeurs lues à partir de la mémoire à tableaux est à nouveau effectué en sens inverse,

6. Procédé selon la revendication 5, caractérisé en ce que le nombre des emplacement dont les valeurs numériques de coordonnées (X′; Y′) sont décalées est dépendant de leur importance.

7. Procédé selon revendication 5 ou 6, caractérisé en ce que les valeurs numériques de coordonnées (X′; Y′) sont subdivisées en zones de valeurs et dans chacune de ces zones de valeurs un décalage d'emplacement correspondant est opéré.

8. Dispositif de circuit pour convertir des signaux numériques de chrominance d'un système de coordonnées rectangulaires de couleurs en signaux numériques de teinte de couleurs et en signaux numériques de saturation d'un système de coordonnées polaires de couleurs en utilisant une mémoire et un circuit de transformation (10) recevant les signaux numériques de chrominance (X; Y), circuit caractérisé en ce qu'il comporte:

a) un étage d'identification de cadrans (11) qui reçoit les chiffres binaires de valeurs élevées des signaux numériques de chrominance (X; Y),

b) une mémoire adressable à tableaux (12) dont les entrées d'adressage sont raccordées au circuit de transformation (10),

c) un étage d'inversion (13) en communication avec un groupe de sorties de la mémoire à tableaux (12),

un second système de coordonnées rectangulaires de couleurs (8) qui s'étend parallèlement au premier système de coordonnées rectangulaires de couleurs (1) étant positionné par le centre ($P'_0$) du système de coordonnées polaires de couleurs (4), ce second système subdivisant le système polaire de coordonnées de couleurs en quatre cadrans, des numéros de cadrans numériques et croissant dans le sens des signaux de teinte de couleurs (T) croissant étant associés aux cadrans individuels, et les éléments de circuits des dispositifs accomplissant les fonctions suivantes:

α) détermination des cadrans dans lesquels tombent les signaux numériques de chrominance (X; Y) et repérage des numéros caractéristiques numériques des cadrans ainsi déterminés dans l'étage d'identification de cadrans (11)

β) stockage des signaux de saturation (S) et des signaux de teinte de couleurs (T*) d'un cadran sélectionné dans la mémoire à tableaux (12) en fonction des valeurs numériques de coordonnées (X′, Y′) du cadran sélectionné d'après les relations:

$$S = c_1\sqrt{X'^2 + Y'^2}$$

et

$$T^* = c_2 \arctan \frac{Y'}{X'}$$

$c_1$ et $c_2$ étant des facteurs constants.

γ) calcul en valeurs des signaux numériques de chrominance (X, Y) dans les valeurs numériques de coordonnées correspondantes (X′, Y′) des cadrans sélectionnés dans le circuit de transformation (10),

δ) adressage de la mémoire à tableaux (12) par les valeurs de coordonnées (X′, Y′) obtenues dans le circuit de transformation (10) et lecture des signaux de saturation (S) et des signaux de teinte de couleur (T*) correspondants du cadran sélectionné et à partir de la mémoire à tableaux (12),

ε) inversion dans l'étage d'inversion (13) en fonction des numéros caractéristiques numériques de cadrans repérés dans l'étage d'identification de cadrans (11) des signaux numériques de teinte de couleurs (T*) lus, dans le cas où le cadran déterminé est le second ou le quatrième cadran.

ζ) formation des signaux numériques de teinte de couleurs (T) de tous les cadrans à partir des numéros caractéristiques numériques de cadrans repérés dans l'étage d'identification de cadran (11) et à partir des signaux numériques de teinte de couleurs (T*) lus à partir de la mémoire à tableaux (12) du cadran sélectionné, les numéros caractéristiques numériques de cadran ainsi repérés étant respectivement les chiffres binaires de valeurs maximales et des signaux de teinte de couleurs formés (T) tandis que les signaux numériques de teinte de couleurs lus (T*) en sont les chiffres binaires de valeurs minimales.

9. Dispositif de circuit selon la revendication 8, caractérisé en ce que le circuit de transformation (10) revêt la forme d'un inverseur pour les chiffres binaires de basses valeurs des signaux numériques de chrominance (X; Y), commandé par les chiffres binaires de valeurs respectivement maximales de ces signaux numériques de chrominance.

10. Dispositif de circuit selon revendication 8 ou 9, caractérisé en ce que:

a) un étage de décalage (46) susceptible d'être commandé est disposé entre le circuit de transformation (10) et la mémoire à tableaux (12′) pour le décalage d'emplacements des valeurs de coordonnées (X′, Y′),

b) un étage de correction (52), susceptible d'être commandé, pour les signaux de saturation (S) est branché à la suite de la mémoire à tableaux (12′) pour rendre le décalage d'emplacements réversible,

c) les entrées de commande de l'étage de décalage (46) et de l'étage de correction (52) sont reliés à un générateur de commande (48) qui est appliqué aux valeurs de coordonnées numériques (X′, Y′).

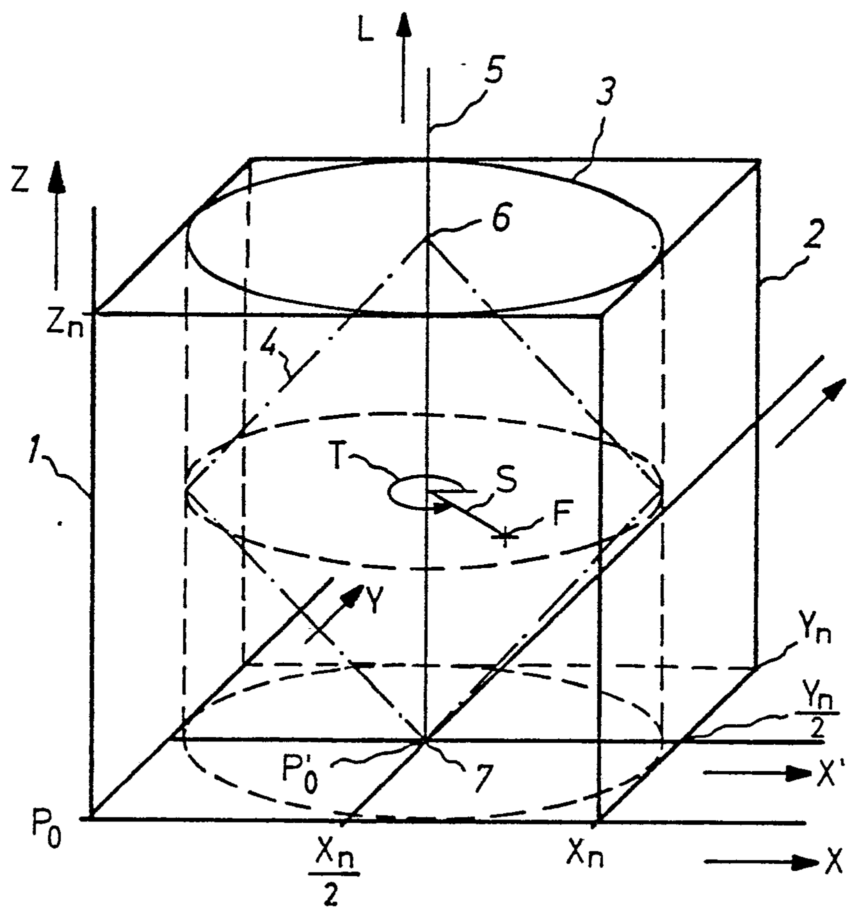


*Fig. 1*

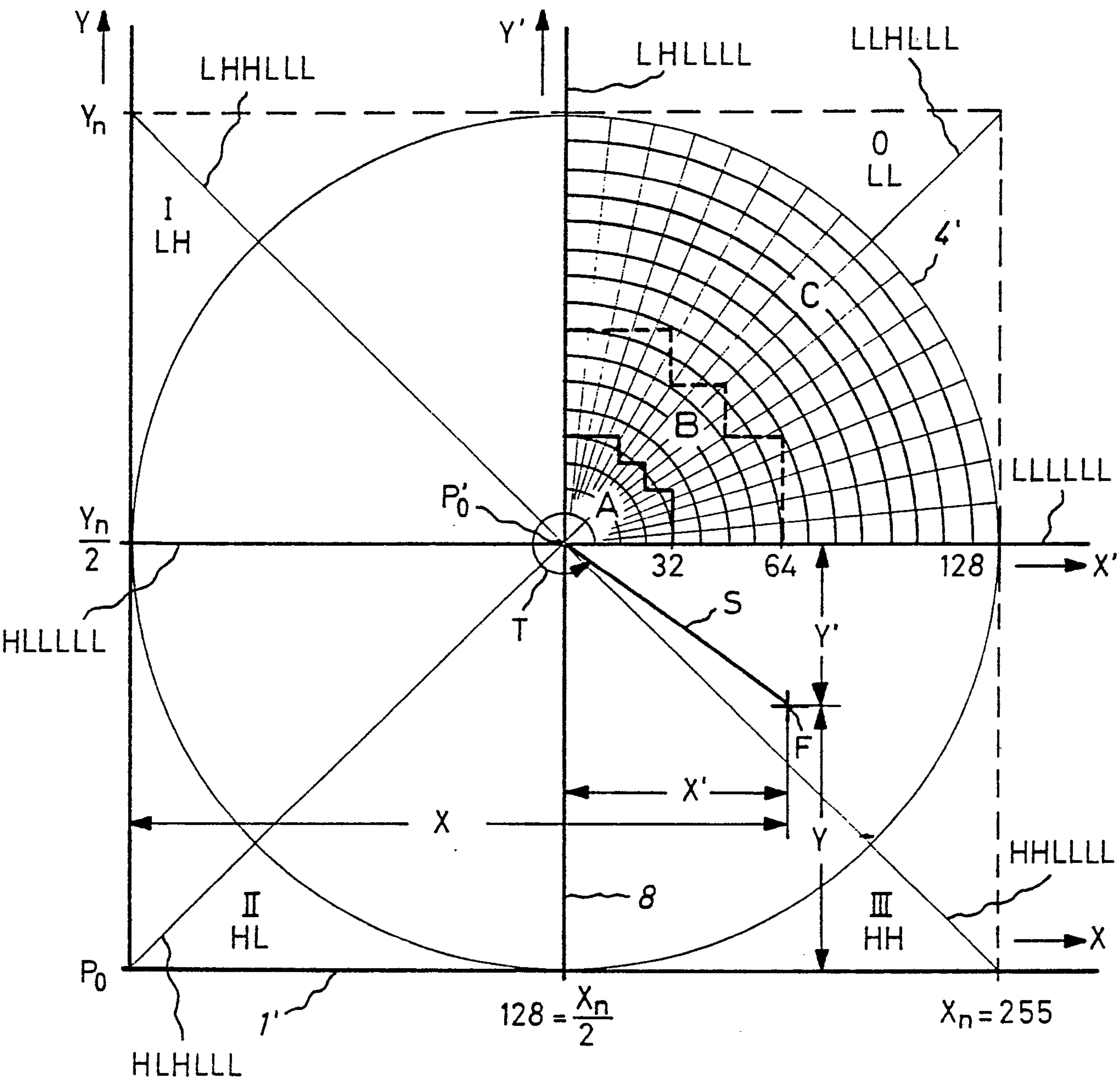

Y
Y'
LHLLLL
LLHLLL
LHHLLL
$Y_n$
0
LL
I
LH
4'
C
B
LLLLLL
$P_0'$
A
$\frac{Y_n}{2}$
32
64
128
X'
S
HLLLLL
T
Y'
F
X'
X
Y
HHLLLL
8
II
HL
III
HH
X
$P_0$
1'
$128 = \frac{X_n}{2}$
$X_n = 255$
HLHLLL


Fig. 2

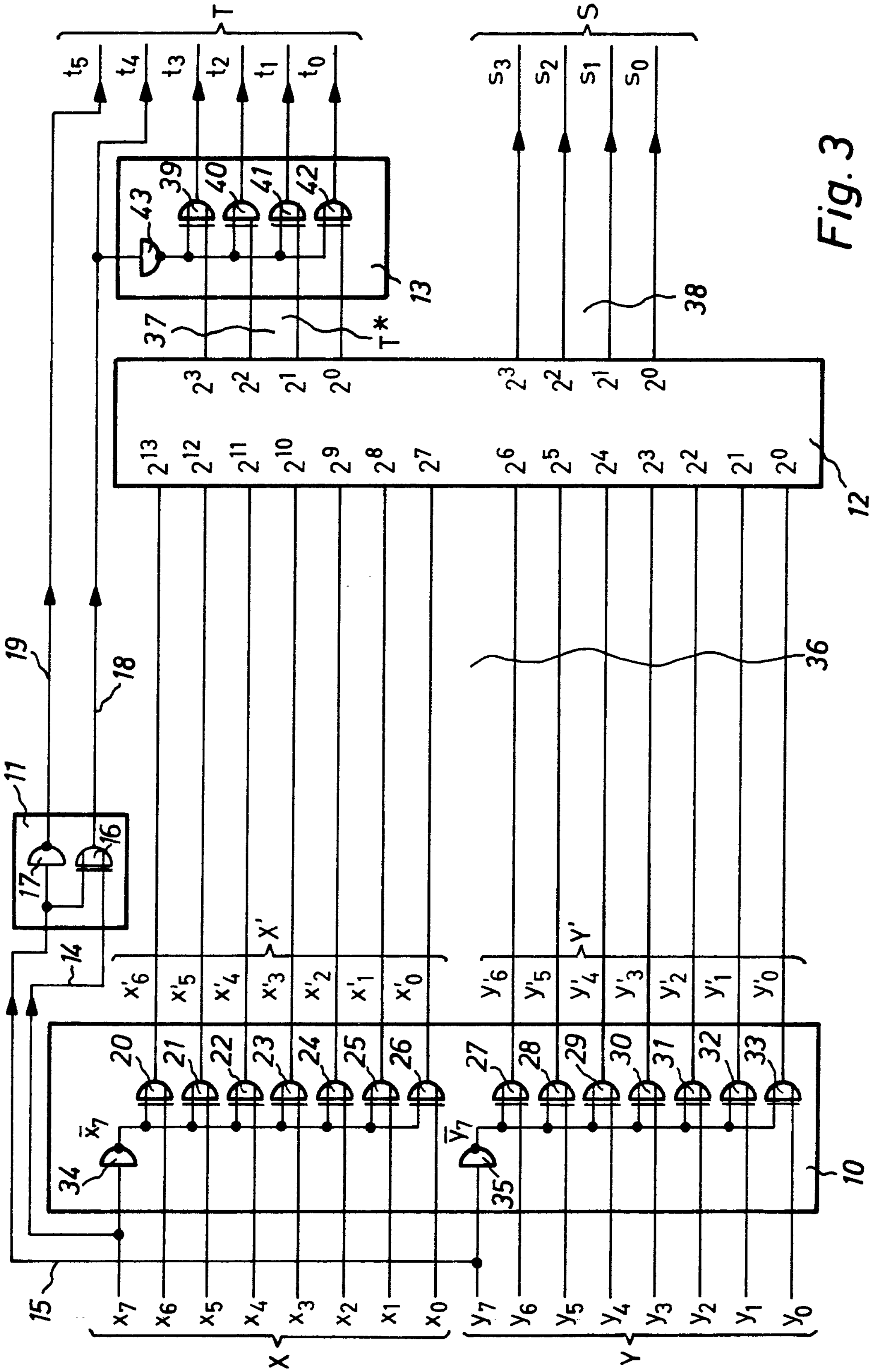
X
Y
X'
Y'
T
S
T*
10
11
12
13
14
15
16
17
18
19
20
21
22
23
24
25
26
27
28
29
30
31
32
33
34
35
36
37
38
39
40
41
42
43

Fig. 3

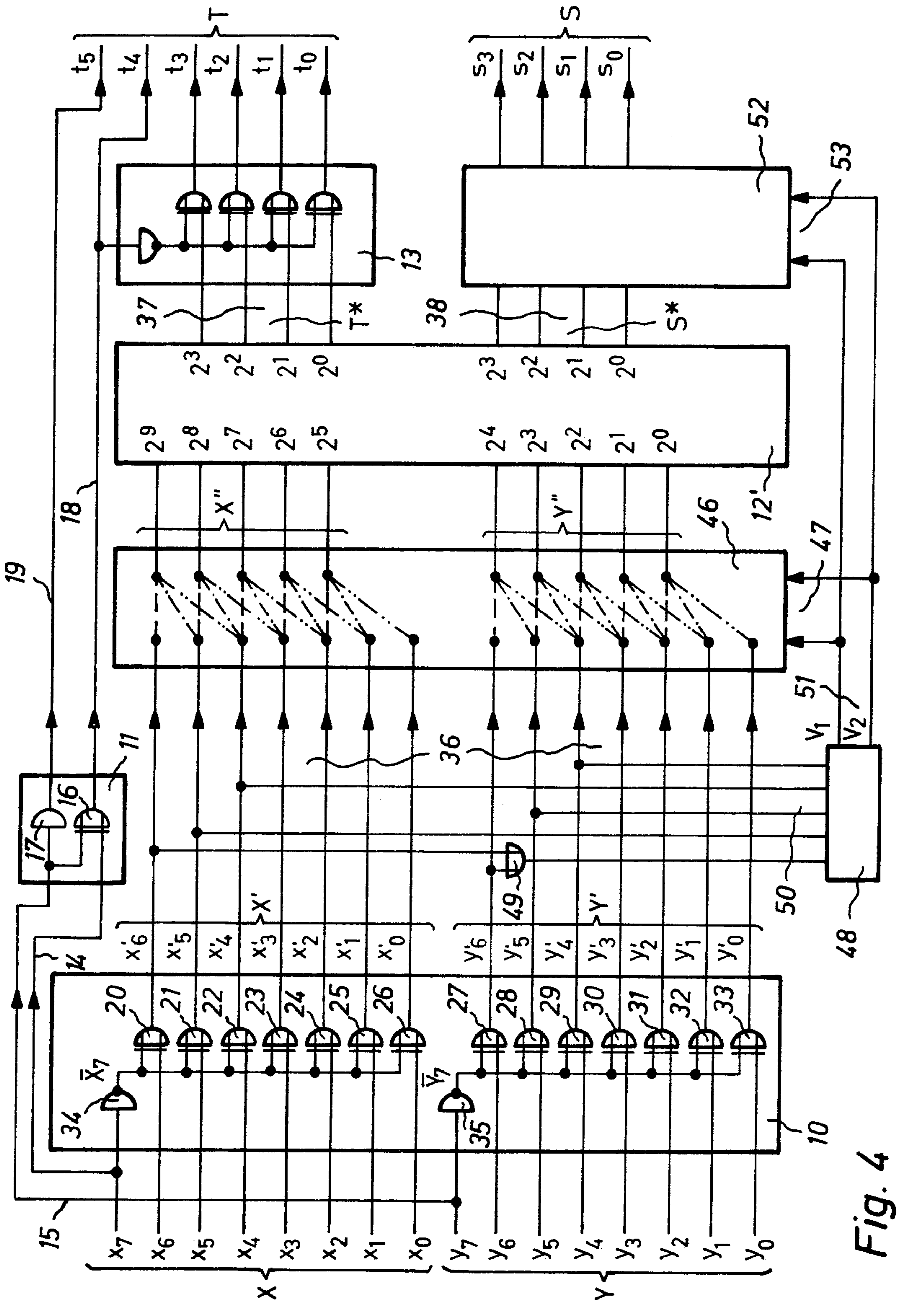
T
t5
t4
t3
t2
t1
t0
S
s3
s2
s1
s0
T*
S*
X"
Y"
X'
Y'
x'6
x'5
x'4
x'3
x'2
x'1
x'0
y'6
y'5
y'4
y'3
y'2
y'1
y'0
X̄7
Ȳ7
V1
V2
x7
x6
x5
x4
x3
x2
x1
x0
y7
y6
y5
y4
y3
y2
y1
y0
X
Y
10
11
12'
13
14
15
16
17
18
19
20
21
22
23
24
25
26
27
28
29
30
31
32
33
34
35
36
37
38
46
47
48
49
50
51
52
53

Fig. 4

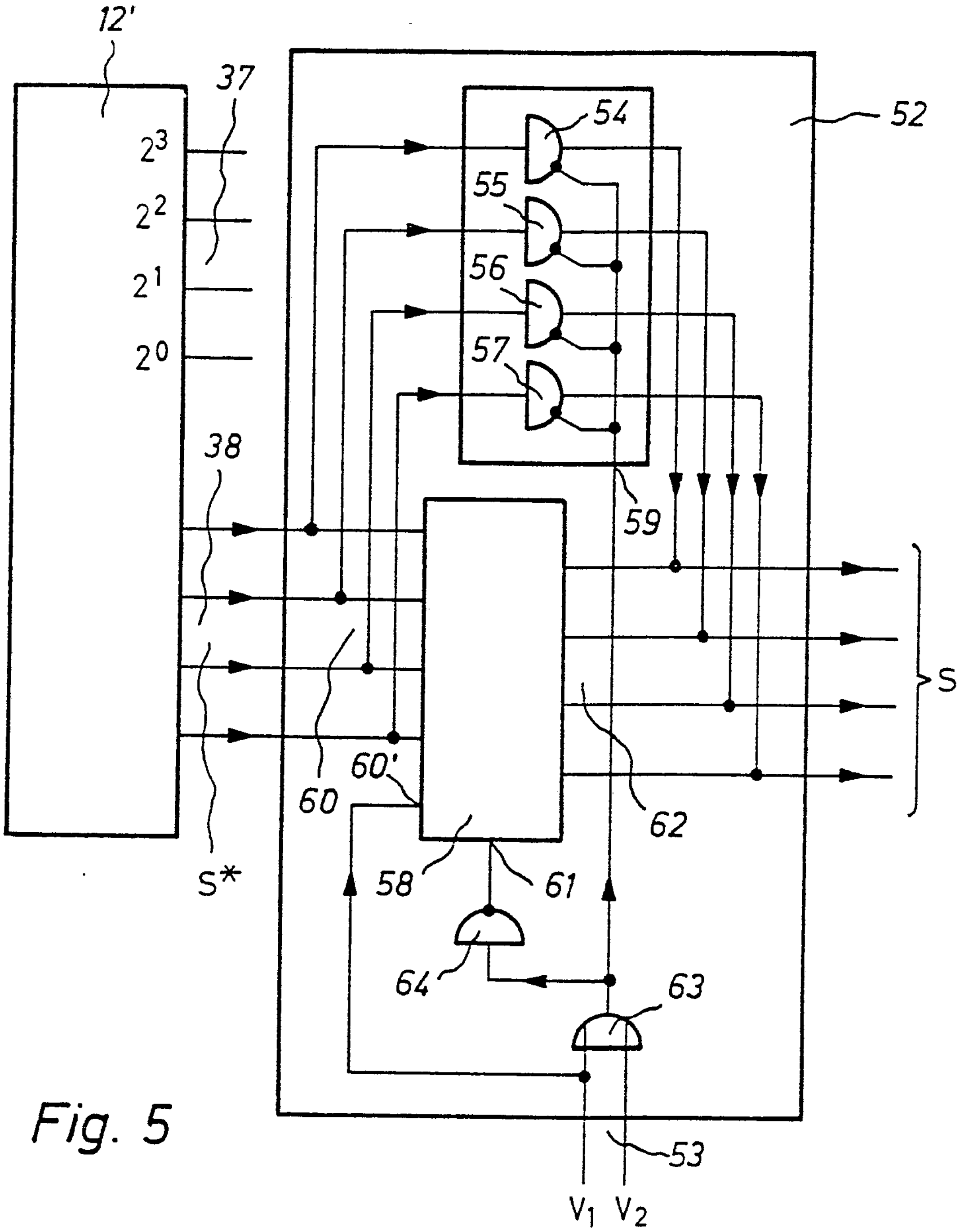


Fig. 5